# EUROPEAN PATENT SPECIFICATION

(11) **EP 0 330 345 B1**
(45) Date of publication and mention of the grant of the patent: **03.05.1995**
(21) Application number: 89301250.0
(22) Date of filing: 09.02.1989
(51) Int. Cl.: C08G 61/00

(54) **Process for producing aromatic polymer compounds**
Verfahren zur Herstellung von aromatischen Polymeren
Procédé de préparation de polymères aromatiques

(30) Priority: 09.02.1988 JP 27979/88
(43) Date of publication of application: 30.08.1989
(73) Proprietor: MATSUSHITA ELECTRIC INDUSTRIAL CO., LTD., Kadoma-shi, Osaka-fu, 571 (JP)
(72) Inventor: Hotta, Shu, Hirakata-shi Osaka (JP); Soga, Mamoru, Osaka-shi Osaka (JP); Sonoda, Nobuo, Settsu-shi Osaka (JP)
(74) Representative: Cresswell, Thomas Anthony

(56) References cited:
- CHEMICAL ABSTRACTS, vol. 101, no. 18, 29th October 1984, page 28, abstract no.152752p, Columbus, Ohio, US; F. ANDREANI et al.: "Synthesis and electricproperties of new thiophene polymers", & COMPORTAMENTO ELETTR. MATER.POLIM., GIORNATE STUD. 1984, 313-14
- JAPANESE JOURNAL OF APPLIED PHYSICS/PART 2: LETTERS, vol. 26, no. 6, June 1987,pages L1038-L1039, Tokyo, JP; K. YOSHINO et al.: "Fusibility of polythiophenederivatives with substituted long alkyl chain and their properties

## Description

This invention relates to a process for producing aromatic or heterocyclic polymer compounds which are useful in various fields of electronics and optical electronics.

Attempts have been heretofore made to produce aromatic polymer compounds which are particularly useful in electronics. For instance, there is known a process for the preparation of aromatic polymers by condensation of metal halides derived from aromatic compounds in the presence of a nickel compound catalyst (T. Yamamoto et al., J. Polym. Sco., Polym. Lett. Ed., 18, 9 (1980)). A process comprising directly oxidizing aromatic compounds with iron (III) chloride is also known (R. Sugimoto et al,. Chem. Express, 1, 635 (1986)). Another process comprises homopolymerizing dihalogenoaromatic compounds by reaction in the presence of a nickel compound, including a nickel halide (Yamamoto et al., Bull. Chem. Soc. Japan, 56, 1497-1502 (1983)).

In the field of organic synthesis, studies have been made on the Friedel-Crafts reaction where aromatic compounds and alkyl halides are condensed in the presence of metal halides to obtain alkylated aromatic compounds.

The prior art processes have, however, the drawback that the resultant aromatic polymer compounds have usually only a small degree of polymerization and do not exhibit desirable physical properties. For instance, according to the first mentioned process of Yamamoto et al, the production of a compound of formula (A) 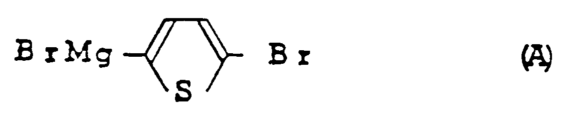
by addition of Mg to 2,5-dibromothiophene in a quantitative manner is difficult. The dibromothiophene may remain unreacted if too little Mg is used whereas a bis(bromomagnesium) product may be secondarily produced if an excess of Mg is used. Thus, the compound (A) cannot be obtained in a stoichiometric amount in most cases.

The invention seeks to provide a process for producing an aromatic polymer compound with a high degree of polymerization which can solve the problems involved in the prior art processes.

The invention also seeks to provide a process for producing an aromatic polymer compound which can be carried out simply and efficiently to obtain a high molecular weight aromatic polymer compound.

In accordance with the invention, there is provided a process for producing an aromatic polymer compound which comprises subjecting a halogenated aromatic compound which has an aromatic or heterocyclic five-membered nucleus and at least one active hydrogen atom and at least one halogen atom directly bonded to the nucleus to a dehydrohalogenation reaction in the presence of a metal halide and thereby cause a condensation reaction with the formation of an aromatic polymer product.

The halogenated aromatic compound should have at least one aromatic, for example benzene, nucleus or a five-membered heterocyclic nucleus. Compounds having two or more aromatic nuclei directly bonded or condensed together may also be used as the halogenated aromatic compound in the practice of the invention.

The halogenated aromatic compounds used in the practice of the invention must have at least one active hydrogen atom and at least one halogen atom, directly bonded to an aromatic or heterocyclic nucleus. The halogenated aromatic compounds may have substituents other than the at least one halogen atom. The halogenated aromatic compound can be, for example, a halogenated benzene, biphenyl, naphthalene, anthracene, azulene or indole, with or without substituents other than halogens, or can be a halogenated heterocyclic five-membered compound such as a halogenated thiophene, pyrrole, furan, selenophene or terullophene, with or without substituents other than halogens. Substituents may be, for example, an alkyl group, an alkoxy group or a benzyl group. It will be noted that the halogen used above includes chlorine, bromine and iodine. In a specific case, the halogen is fluorine.

The active hydrogen used herein is hydrogen which is reactive. For instance, with compounds having a benzene nucleus, hydrogen atoms joined directly to the benzene nucleus are included within the category of the active hydrogen. When a benzene nucleus is substituted with an alkyl or alkoxy group, the hydrogen atom at the ortho or para position is active hydrogen. Similarly, the hydrogen atom at the ortho or para position with respect to a halogen substituent is also active hydrogen. In addition, with heterocyclic five-membered nucleus such as a thiophene nucleus, the hydrogen atom joined at the a position with respect to the hetero-atom is active hydrogen. Specific and preferred examples of the aromatic halides useful in the practice of the invention include halogenated aromatic compounds such as bromobenzene, α-bromonaphthalene, α-chloronaphthalene, 9-bromoanthracene, 9-iodoanthracene and 4-bromobiphenyl, and halogenated heterocyclic compounds such as 2-bromothiophene, 2-chlorothiophene, 2-bromopyrrole, 2-bromo-3-hexylthiophene, 2-chloropyrrole, 2-chlororfuran and 2-bromofuran. of these, 2-bromothiophene and 2-bromo-3-hexylthiophene are more preferable in view of the ease in preparation and good properties of final polymers obtained therefrom.

The condensation reaction of the invention is illustrated in the following reaction sequence using a thiophene derivative as a halogenated aromatic compound. 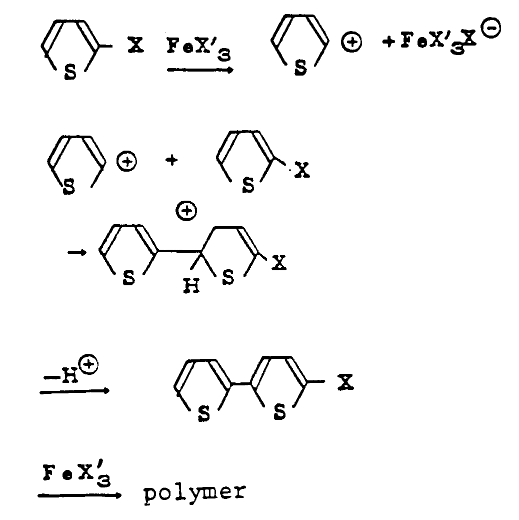
In the above formulae, X and X' independently represent a halogen such as Cl, Br or I.

In the above reactions, the thiophene derivative is first converted into a thienyl ion by the action of the iron (III) halide. The thienyl ion electrophilically attacks another halogenated thiophene molecule to form a halogenated bithienyl molecule. The iron (III) halide again acts on the molecule to bring about an ionic species, which in turn electrophilically attacks another halogenated thiophene molecule, followed by repeating the above procedure to form a polymer. Thus, the polymerization reaction is caused by a simple reaction mechanism, so that there is only a reduced possibility that side reactions and/or polymerization termination reactions will take place. Presumably, this is the reason why an aromatic polymer compound having a high degree of polymerization can be readily obtained.

Oligomers of the halogenated compounds may be used in the process of the invention. Typical examples of oligomers of the halogenated aromatic compounds include a, α'-dibromoquaterthiophene and p,p'-dichloroterphenyl. In this technique, aromatic polymers of a higher degree of polymerization can be obtained.

The polycondensation reaction is generally effected in a solvent at wide temperatures of from -80 to 100°C, preferably not higher than 50°C. At higher temperatures within the above range, a higher degree of polymerization is attained. According to the process of the invention, the resultant polymer has generally a degree of polymerisation of 100 or over, which may depend upon the reaction conditions or the type of metal halide catalyst. The solvent used in the process should be inert to the reaction system and includes, for example, chloroform, dichloroethane, nitrobenzene and 1,2-dichloroethane.

The reaction time is usually from 1 to 20 hours.

The polycondensation reaction should be effected in the presence of a metal halide which is ordinarily used in the Friedel-Crafts reaction. Examples of such metal halides include AlCl₃, AlBr₃, SbCl₅, FeCl₃, SnCl₄, TiCl₄, WCl₆ and MoCl₅. The halides are used as a catalyst and are generally used in an amount of from 0.1 to 4 moles per mole of the starting material or materials.

A number of halogenated aromatic compounds have been set out before, of which those starting compounds having a heterocyclic five-membered nucleus are more conveniently used for conversion into polymers according to the process of the invention. This is considered as follows: a heterocyclic five-membered compound such as a thiophene derivative is more active at opposite a positions of the hetero-atom. These compounds can produce aromatic polymer compounds with a higher degree of polymerization. Especially, aromatic linear polymers can be readily obtained by polycondensation reaction through dehydrohalogenation reaction of α-monohalogeno products of heterocyclic five-membered compounds. Examples of the α-monohalogeno products of heterocyclic five-membered compounds include α-monohalogeno products of thiophene, pyrrole, furan, selenophene and tellurophene. The alpha-monohalogeno products may include α-monochloro, α-monobromo and α- monoiodo products.

For obtaining aromatic linear polymer compounds having good solubility, halogenated heterocyclic five-membered compounds having at least one halogen atom and a long alkyl side chain having 1 to 30 carbon atoms at the β position thereof are preferably used. Examples of such compounds include halogenated thiophene, pyrrole, furan, selenophene and tellurophene having at least one halogen atom and an alkyl group of from 1 to 30 carbon atoms at the β position, e.g. 2-bromo-3-hexylthiophene and 2-chloro-3-butylpyrrole.

It will be noted that all the halogenated aromatic compounds set forth hereinabove can be prepared by known techniques such as described in the Examples.

The present invention is more particularly described by way of the following Examples.

### Example 1

0.01 mole (1.33 g) of aluminium chloride and 40 ml of chloroform were charged into a two-necked flask equipped with a dropping funnel and a condenser, after which 0.04 mole (6.52 g) of 2-bromothiophene was dropped into the flask through the dropping funnel while agitating with a stirrer.

When the agitation was continued for 1 hour, the solution was changed to dark blue in color. Thereafter, the reaction solution was heated and agitated under reflux for 4 hours.

The resultant reaction solution was charged into 400 ml of methanol, from which the resultant precipitate was collected by filtration and washed sufficiently with methanol to obtain about 2 g of a dark red powder.

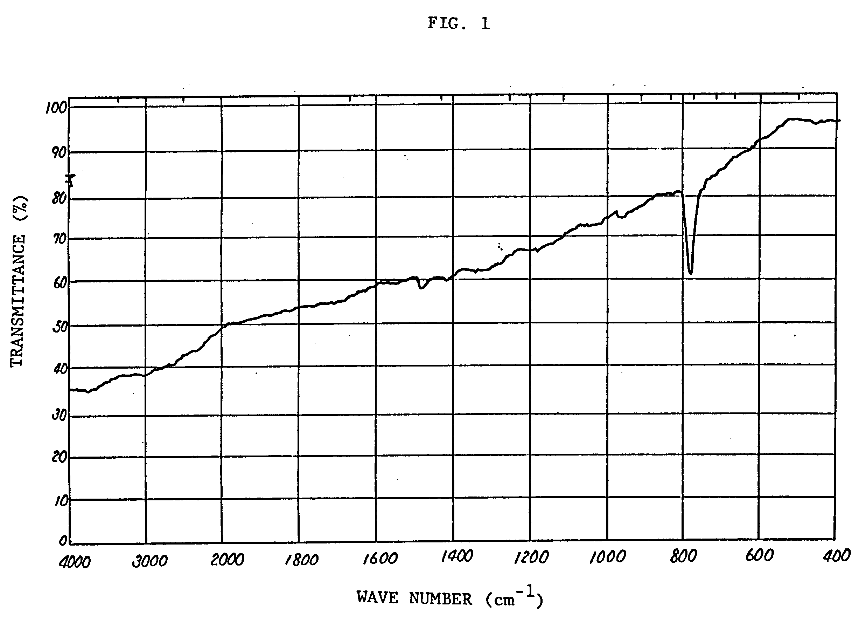

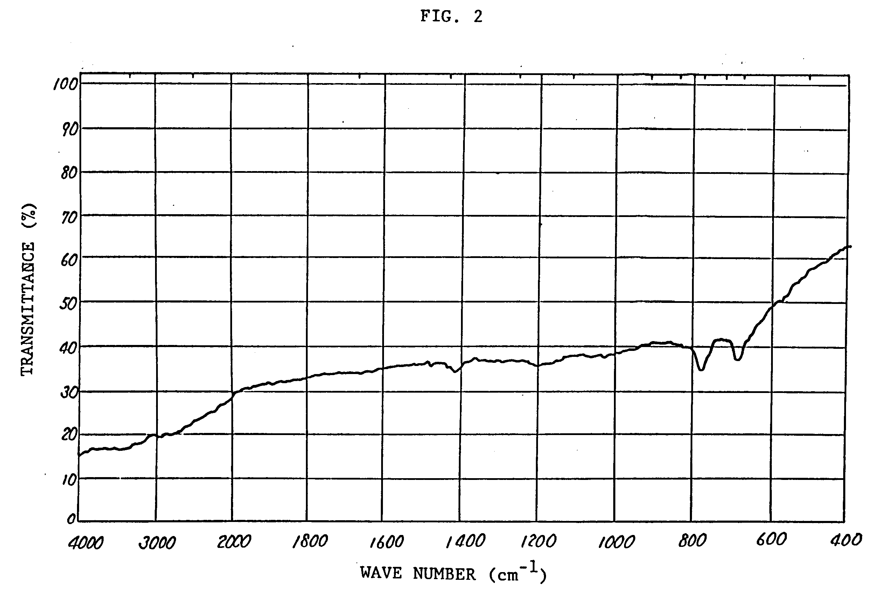

This powder was subjected to IR spectroscopic analysis. The chart for this is shown in Fig. 1, from which the powder was confirmed to be poly(2,5-thiophene) having recurring units of the following formula 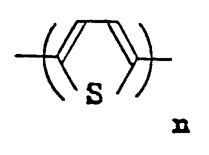
where n was about 100.

As will become apparent from Fig. 1, an absorption in the vicinity of 700 cm⁻¹ attributed to the C-H out-of-plane deformation vibration at the α position of the terminal thienyl group of the following formula 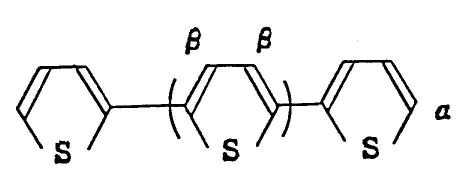
is significantly smaller than a corresponding absorption of polythiophene shown in Yamamoto et al's report (Bull. Chem. Soc. Jpn., 56, 1497 (1983)). This means that the polymer of the invention contains polythienylene of a high degree of polymerization.

### Example 2

3-Hexylthiophene was obtained from 3-bromothiophene and n-hexyl magnesium bromide according to K. Tamao et al's technique described in Tetrahedron 38, 3347 (1982). The resultant product was brominated according to the method of A. Mckillop et al described in J. Org. Chem., 37, 88 (1972), thereby obtaining 2-bromo-3-hexylthiophene.

Subsequently, 0.01 mole (1.62 g) of iron (III) chloride and 40 ml of chloroform were added to a two-necked flask equipped with a dropping funnel and a condenser. While the mixture was agitated with a stirrer. 0.01 mole (2.47 g) of the 2-bromo-3-hexylthiophene was dropped into the mixture through the dropping funnel. Thereafter, the procedure of Example 1 was repeated to obtain about 1 g of a reddish brown powder. This powder was subjected to IR spectroscopic analysis, from which it was found that intense absorption peaks appeared in the vicinity of 820 cm⁻¹ and 3000 cm⁻¹. These absorptions, respectively, attributed to the C-H out-of-plane deformation vibration at the β position of the thiophene ring and the C-H stretch vibration of the hexyl group, from which formation of poly(3-hexylthiophene) was confirmed.

### Example 3

The general procedure of Example 1 was repeated except that 2-bromopyrrole, 2-chlorofuran, 4-bromobiphenyl, α-chloronaphthalene and 9-bromoanthracene were used instead of the 2-bromothiophene, thereby obtaining powders. The respective powders were subjected to IR spectroscopic analysis, from which formation of corresponding polymers was confirmed.

## Claims

1. A process for producing an aromatic polymer compound which comprises subjecting a halogenated aromatic compound which has an aromatic or heterocyclic five-membered nucleus and at least one active hydrogen atom and at least one halogen atom directly bonded to the nucleus to a dehydrohalogenation reaction in the presence of a metal halide and thereby cause a condensation reaction with the formation of an aromatic polymer product.

2. A process according to claim 1, wherein said halogenated aromatic compound is halogenated benzene, biphenyl, naphthalene, anthracene, azulene or indole, with or without substituents other than a halogen.

3. A process according to claim 1, wherein said halogenated aromatic compound is a halogenated heterocyclic five-membered compound selected from halogenated thiophene, pyrrole, furan, selenophene and terullophene, with or without substituents other than the at least one halogen.

4. A process according to claim 3, wherein said halogenated heterocyclic five-membered compound is 2-bromothiophene or 2-bromo-3-hexylthiophene.

5. A process according to claim 3, wherein said halogenated heterocyclic five-membered compound is an α-monohalogeno product of the compound or a halogenated heterocyclic five-membered compound having a long alkyl side chain having from 1 to 30 carbon atoms at the β position thereof.

6. A process according to claim 1, wherein said halogenated aromatic compound is an oligomer of a halogenated aromatic compound.

7. A process according to any one of the preceding claims, wherein said dehydrohalogenation reaction is effected at a temperature of from -80 to 100°C.

8. A process according to claim 7 wherein the temperature is not higher than 50°C.

## Patentansprüche

1. Verfahren zur Herstellung einer aromatischen Polymerverbindung, das die Unterwerfung einer halogenierten aromatischen Verbindung, die einen aromatischen oder heterocyclischen fünfgliedrigen Ring und mindestens ein aktives Wasserstoffatom und mindestens ein Halogenatom, direkt an den Ring gebunden, aufweist, einer Dehydrohalogenierungsreaktion in Anwesenheit eines Metallhalogenids umfaßt, und dadurch eine Kondensationsreaktion unter Bildung eines aromatischen Polymerprodukts veranlaßt.

2. Verfahren nach Anspruch 1, wobei die halogenierte aromatische Verbindung halogeniertes Benzol, Biphenyl, Naphthalin, Anthracen, Azulen oder Indol ist, mit anderen oder ohne andere Substituenten als einem Halogen.

3. Verfahren nach Anspruch 1, wobei die halogenierte aromatische Verbindung eine halogenierte heterocyclische fünfgliedrige Verbindung ist, ausgewählt aus halogeniertem Thiophen, Pyrrol, Furan, Selenophen und Tellurophen, mit anderen oder ohne andere Substituenten als dem mindestens einen Halogen.

4. Verfahren nach Anspruch 3, wobei die halogenierte heterocyclische fünfgliedrige Verbindung 2-Bromthiophen oder 2-Brom-3-hexylthiophen ist.

5. Verfahren nach Anspruch 3, wobei die halogenierte heterocyclische fünfgliedrige Verbindung ein α-Monohalogenprodukt der Verbindung oder eine halogenierte heterocyclische fünfgliedrige Verbindung mit einer langen Alkylseitenkette mit 1 bis 30 Kohlenstoffatomen an ihrer β-Position ist.

6. Verfahren nach Anspruch 1, wobei die halogenierte aromatische Verbindung ein Oligomer einer halogenierten aromatischen Verbindung ist.

7. Verfahren nach einem der vorstehenden Ansprüche, wobei die Dehydrohalogenierungsreaktion bei einer Temperatur von -80 bis 100 °C durchgeführt wird.

8. Verfahren nach Anspruch 7, wobei die Temperatur nicht mehr als 50 °C beträgt.

## Revendications

1. Procédé de préparation d'un polymère aromatique consistant à soumettre un composé aromatique halogéné qui comporte un noyau aromatique ou hétérocyclique à 5 chaînons, au moins un atome d'hydrogène actif et au moins un atome d'halogène lié directement au noyau à une réaction de déshydrohalogénation en présence d'un halogénure de métal réalisant ainsi une réaction de condensation qui aboutit à la formation d'un produit polymère aromatique.

2. Procédé conforme à la revendication 1 dans lequel ledit compose aromatique halogéné est un benzène halogéné, biphényle halogéné, anthracène halogéné, azulène halogéné ou indole halogéné portant ou non d'autres substituants qu'un atome d'halogène.

3. Procédé conforme à la revendication 1 dans lequel ledit composé aromatique halogéné est un composé hétérocyclique halogéné à 5 chaînons choisi dans le groupe formé par les thiophène, pyrrole, furane, sélénophène et téllurophène halogénés, portant ou non d'autres substituants qu'un atome d'halogène.

4. Procédé conforme à la revendication 3 dans lequel ledit compose hétérocyclique halogéné à 5 chaînons est le 2-bromothiophène ou le 2-bromo-3-hexylthiophène.

5. Procédé conforme à la revendication 3 dans lequel ledit composé hétérocyclique halogéné à 5 chaînons est le produit monohalogéné en position α du composé correspondant ou un composé hétérocyclique halogéné à 5 chaînons portant en position β une longue chaîne alkyle latérale comportant de 1 à 30 atomes de carbone.

6. Procédé conforme à la revendication 1 dans lequel ledit compose aromatique halogéné est un oligomère d'un composé aromatique halogéné.

7. Procédé conforme à une quelconque des revendications précédentes dans lequel ladite réaction de déshydrohalogénation est réalisée à une température comprise entre -80 et 100 °C.

8. Procédé conforme à la revendication 7 dans lequel la température n'est pas supérieure à 50 °C.
